# EUROPEAN PATENT SPECIFICATION

(11) **EP 0 478 748 B1**
(45) Date of publication and mention of the grant of the patent: **14.09.1994**
(21) Application number: 91907932.7
(22) Date of filing: 16.04.1991
(51) Int. Cl.: B65G 47/54

(54) **THREE-WAY TRANSFER CONVEYOR**
DREIWEGÜBERGABEFÖRDERER
TRANSPORTEUSE DE TRANSFERT A TROIS VOIES

(30) Priority: 20.04.1990 US 512119
(43) Date of publication of application: 08.04.1992
(73) Proprietor: THE INTERLAKE COMPANIES, INC., Lisle, IL 60532-4387 (US)
(72) Inventor: REED, David, B., Louisville, KY 40205 (US); FULTZ, William, A., Louisville, KY 40206 (US)
(74) Representative: UEXKÜLL & STOLBERG
(86) International application number: US9102595
(87) International publication number: WO9116251

(56) References cited:
- US-A- 4 730 718
- US-A- 4 880 099

## Description

### BACKGROUND OF THE INVENTION

The present invention pertains to conveyors, and, in particular, to a transfer apparatus for conveyors.

When articles are moving along a conveyor, it is sometimes desirable to remove some articles from the main conveyor line and transfer them onto alternate conveyors or onto a platform or other device. U. S. Patent No. 4,730,718 "Fazio" discloses a transfer station at which the articles may be transferred off the main conveyor to the left or to the right, or the articles may be permitted to continue travelling along the main conveyor path.

There are several drawbacks to the arrangement shown in the Fazio patent. For example, that design requires that there be enough space between the conveyor rollers for the width of two transfer belts -- one moving to the left and one moving to the right. This leaves a fairly wide gap between conveyor rollers which may create some instability in conveying the products when the products are moving straight through the transfer station. In addition, the transfer belts in the Fazio design are constantly driven and are intermittently stretched as the transfer direction is changed. This creates a situation in which the transfer belts experience substantial wear. It also consumes more power than would be consumed if the transfer belts could be driven only when they were needed. The Fazio design also has many moving parts, with two sets of transfer belts being shifted up and down.

### SUMMARY OF THE INVENTION

The present invention provides a conveyor as claimed in claim 1.

The present invention requires less space between the rollers in the transfer portion and therefore provides a more stable conveying surface.

The present invention does not require two vertical shift mechanisms for each transfer belt as in the prior art, instead requiring only one vertical shift mechanism per transfer station, thereby eliminating many moving parts.

The present invention provides this economy of parts by providing for each transfer belt to rotate in two different directions.

In the present invention, the transfer belts are driven only when they are needed for transferring articles off to the left or right or onto the main conveyor from the left or right, thus conserving power and reducing wear on the transfer belts.

In the present invention, the entire transfer belt is shifted up and down for the transfer function, eliminating the problem of stretching of the transfer belt.

The present invention also provides a more positive drive than in the prior art, with less opportunity for slippage in the event of a heavy load.

### BRIEF DESCRIPTION OF THE DRAWINGS

Figure 1 is a top plan view of the transfer mechanism of the present invention, with some of the lower portions eliminated, because they cannot be seen clearly enough from this view;
Figure 2 is a schematic of a pneumatic control system for the transfer mechanism of Figure 1;
Figure 3 is a side sectional view of the transfer mechanism of Figure 1 with more of the details added and the shiftable frame in the "down" position;
Figure 4 is a side sectional view of the transfer mechanism of Figure 1 with the same details as Figure 3 and with the shiftable frame in the "up" position;
Figure 5 is a view along the section 5-5 of Figure 1 with the details added;
Figure 6 is a view along the section 6-6 of Figure 1, with the details added;
Figure 7 is a plan view of the drive roller, showing how it pivots to engage each friction wheel;
Figure 8 is a broken-away exploded perspective view showing the piston-cylinder arrangement for shifting the drive roller relative to the shiftable frame;
Figure 9 is a front sectional view of the shiftable frame mechanism, showing an article being transferred to the right side; and
Figure 10 is the same view as Figure 9, showing the article being transferred to the left side.

### DESCRIPTION OF THE PREFERRED EMBODIMENT

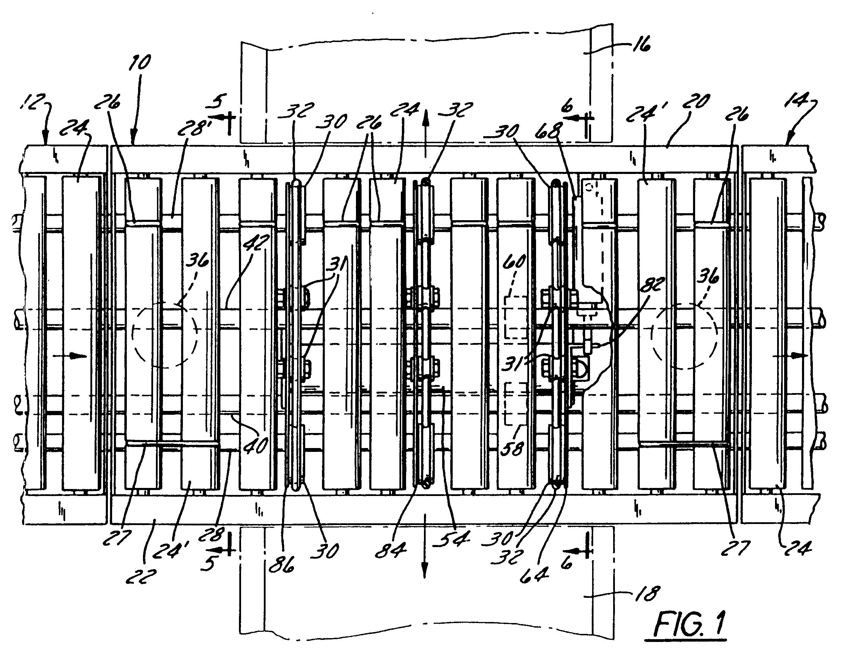

As shown in Figure 1, the three-way transfer mechanism of the present invention is intended to be used in conjunction with a feeder conveyor 12, a straight exit conveyor 14, and right and left exit conveyors 16, 18, respectively. The feeder and exit conveyors 12, 14 are preferably made up of lineshaft-driven rollers 24, as shown. The right and left exit conveyors 16, 18 may be any type of conveyor, including lineshaft-driven rollers, conveyor belts, and so forth. The side exit conveyors 16, 18 could even be chutes or other known devices for carrying articles off of the main conveyor.

The frame of the transfer conveyor includes first and second side rails 20, 22, on which are mounted the first and second ends of the conveyor rollers 24. The conveyor rollers 24 are driven by o-rings 26, each of which wraps around the drive shaft 28 and around its respective roller 24. Two of the conveyor rollers 24' are not driven directly by the drive shaft but are driven by an o-ring 27 from the adjacent roller 24.

The conveyor rollers 24 carry articles directly from the feeder conveyor 12 to the straight exit conveyor 14. In order to transfer articles onto the right and left exit conveyors, 16, 18, another mechanism is used. It can be seen in Figure 1 that, at three of the spaces between the conveyor rollers 24 are located sets of large sheaves 30, small sheaves 31, and transfer belts 32. Two of the transfer belts 32 are shown in section in Figure 1. Each transfer belt 32 wraps around its respective set of sheaves 30, 31 and rotates at right angles to the conveyor rollers 24. In the preferred embodiment, the transfer belts 32 are large o-rings, but other types of belts could be used instead. Also, in some applications, different numbers of transfer belts 32 might be used.

These transfer belts 32 can be driven clockwise, so as to carry articles off to the right exit conveyor 16, and can be driven counterclockwise to carry articles onto the left exit conveyor 18. The mechanism for driving the transfer belts will be described in detail later. It is also possible to reverse the direction of all the drives, so the conveyors 16, 18, and 14 would feed articles onto the conveyor 12.

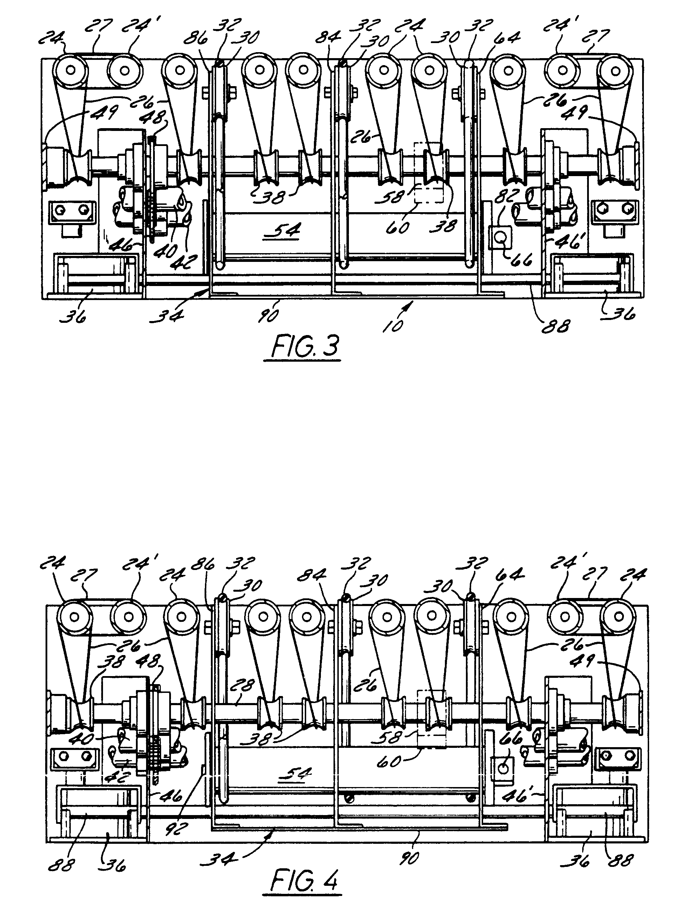

Each set of sheaves 30, 31 which support the transfer belts 32 is mounted on one of the three vertical plates 64, 84, 86 of a shiftable frame 34, which can be shifted up and down by means of air bags 36. The sheaves 30, 31 are mounted on their respective plates by means of stub shafts, and all the sheaves mounted on a given vertical plate are mounted in a substantially co-planar arrangement, so that the transfer belt 32, when wrapped around the set of sheaves 30, 31, lies in a single plane. When articles are to be sent straight through the sorter station from the feeder conveyor 12 to the straight exit conveyor 14, the air bags 36 are in the deflated position (as in Figure 3), with the top surface of the transfer belts 32 located below the top surface of the conveyor rollers 24. When the articles are to be transferred onto the right or left exit conveyor 16, 18, the air bags 36 are inflated, as in Figure 4, and the shiftable frame 34 moves up, so that the top surface of the transfer belts 32 is located above the top surface of the conveyor rollers 24 and will therefore be the portion in contact with the articles being conveyed.

As shown in Figures 3 and 4, the drive shaft 28 runs lengthwise under the transfer conveyor 10. At each end of the transfer conveyor 10, the drive shaft 28 terminates in a sprocket 49 shown best in Figures 3 and 4. The drive shaft 28 of the transfer conveyor 10 is then connected to the end sprocket of the adjacent drive shaft portion of the feeder and exit conveyors 12, 14 by means of a double-width chain (not shown) which wraps around the two adjoining end sprockets. This is a standard method for connecting lengths of drive shaft in the conveyor industry. Drive shaft pulleys 38 are mounted on the drive shaft 28. Each small O-ring 26 wraps around its respective drive shaft pulley 38 and around its respective conveyor roller 24, fitting into a groove in the conveyor roller 24, so, when the drive shaft 28 rotates, it drives the conveyor rollers 24 by means of the o-rings 26. It is intended in the preferred embodiment that the drive shaft 28 will be driven continuously, so the conveyor rollers 24 will also be driven continuously.

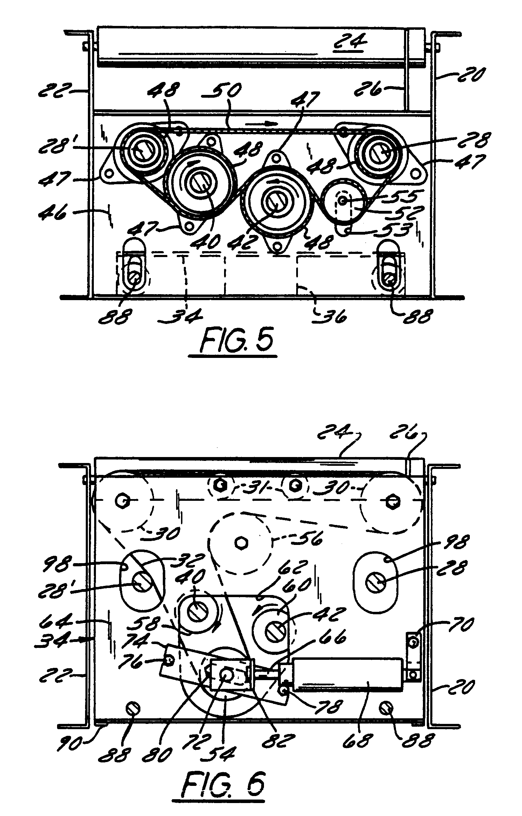

The transfer belts 32 are also driven by the drive shaft 28. As shown in Figure 5, the drive shaft 28, a first friction wheel shaft 40, a second friction wheel shaft 42, and a cross-over shaft 28' are all mounted on a stationary plate 46 near the rear of the transfer conveyor by means of flange bearings 47 which are bolted onto the plate 46. The drive shaft 28, first and second friction wheel shafts 40, 42, and the cross-over shaft 28' run parallel to each other. Each of these shafts mounts to another fixed plate 46' near the other end of the transfer station 10 by means of another set of flange bearings (not shown). Each of the shafts 28, 28', 40, 42 has a sprocket 48 mounted on it between the fixed plate 46 and the rear shiftable plate 86. These sprockets 48 are mounted in a substantially co-planar arrangement. As shown in Figure 5, a chain 50 wraps around all those sprockets 48 in such a way that, when the drive shaft 28 rotates in a clockwise direction, the first friction wheel shaft 40 rotates in a clockwise direction, and the second friction wheel shaft 42 rotates in a counter-clockwise direction. A tensioning roll 52 is also used to keep the chain 50 properly tensioned. The tensioning roll 52 is mounted in a slot 53 in order to keep the chain tight. To mount the tensioning roll 52, the tensioning roll shaft 55 is positioned in the slot 53 in the right place to keep the chain tight, and the bolt on the tensioning roll shaft 55 is simply tightened to keep the tensioning roll 52 in place. It should be noted that the cross-over shaft 28' can serve as an alternative drive shaft, permitting the conveyor to be driven from either side. However, in this embodiment, the cross-over shaft 28' simply is driven by the drive shaft 28 through the chain 50.

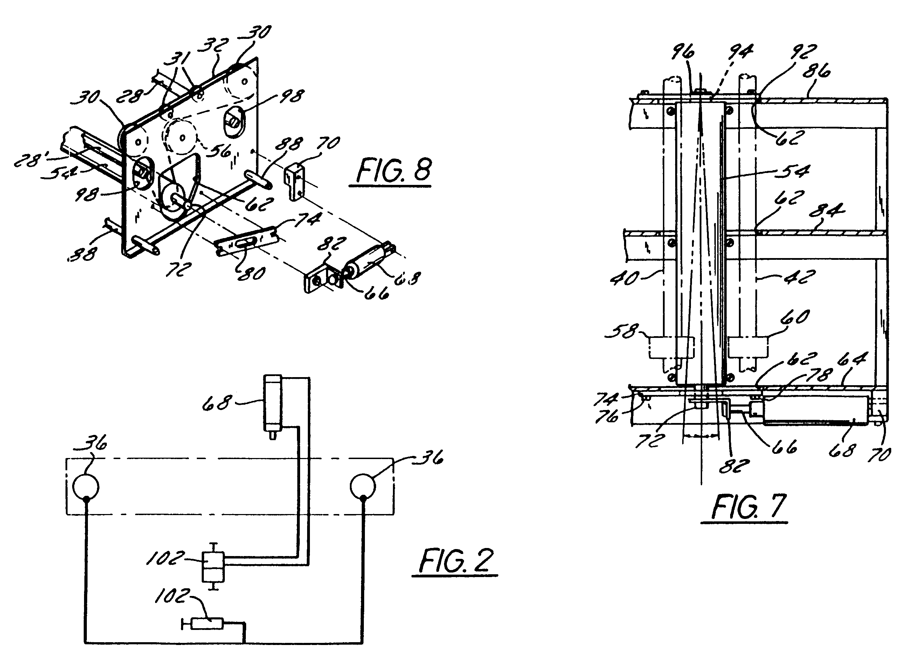

Figure 6 is a view of a portion of the shiftable frame 34, showing the sheaves 30, 31 mounted on the first end plate 64 of the shiftable frame 34. The center plate 84 and second end plate 86 of the shiftable frame 34 have large sheaves 30 and small sheaves 31 mounted on them in a similar fashion as shown in Figure 1. The first friction wheel 58 and second friction wheel 60 are mounted on their respective friction wheel shafts 40, 42, which pass through a hole 62 in the end plate 64 of the shiftable frame 34. The friction wheels 58, 60 are fixed to their respective shafts 40, 42 between the first end plate 64 of the shiftable frame 34 and the center plate 84 of the shiftable frame 34 as shown in Figures 1 and 6. The two friction wheels 58, 60 lie substantially in the same plane.

A piston and cylinder 68 are also mounted on the end plate 64 of the shiftable frame 34, as shown in Figures 6 and 8. The cylinder 68 is bolted onto a bracket 70, which, in turn, is bolted to the end plate 64, permitting the cylinder 68 to pivot in the plane of the end plate 64. The piston rod 66 is mounted on the end plate 64 and is connected to the shaft 72 of the drive roller 54 by means of a two-piece bracket. The first bracket piece 74 is bolted to the end plate 64 by means of two bolts 76, 78 and has a central elongated hole 80 through which the shaft 72 of the drive roller 54 extends. The second bracket piece 82 is a simple L-shaped piece which is fastened to the piston rod 66 on one leg and to the shaft 72 of the drive roller on the other leg.

This mounting arrangement permits the front end of the shaft 72 of the drive roller 54 to be shifted along the central elongated hole 80 as the piston rod 66 moves in and out of the cylinder. Of course, the shiftable frame 34 moves up and down as the air bags 36 are inflated and deflated, and both ends of the drive roller shaft 72 move up and down with the shiftable frame 34.

The shiftable frame 34 is made up of several parts. The first end plate 64, which can be seen best in Figures 6 and 8, is identical to the center plate 84 and to the second end plate 86. These three plates 64, 84, 86 are rigidly connected to each other by means of the rods 88, which extend through holes in all the plates, and by means of the bottom plate 90, which is welded to the bottoms of the end plates and center plate 64, 86, 84. The rods 88 extend to the air bags 36 and are raised and lowered by the air bags 36. As shown in Figure 7, the drive roller 54 is connected to the second end plate 86 by means of a bracket 92, which is bolted to the second end plate 86 and extends across the large hole 62 in the second end plate 86. The bracket 92 has a smaller hole 94 in which is mounted a bushing 96, which permits the drive roller 54 to pivot slightly at the second end as the piston rod 66 moves in and out at the first end. The drive roller 54 is free to move in the large hole 62 in the center plate 84.

It should be noted that all three plates of the shiftable frame 34 include enlarged openings 98 which allow the shafts which are fixed with respect to the conveyor side rails 20, 22 to extend through the shiftable frame 34 without interfering with the plates 64, 84, 86 as they shift up and down. For example, the drive shaft 28 extends through the openings 98, and the alternative drive shaft 28' also passes through the enlarged openings 98. The first and second friction wheel shafts 40, 42 pass through the large opening 62 in the shiftable plates 64, 84, 86.

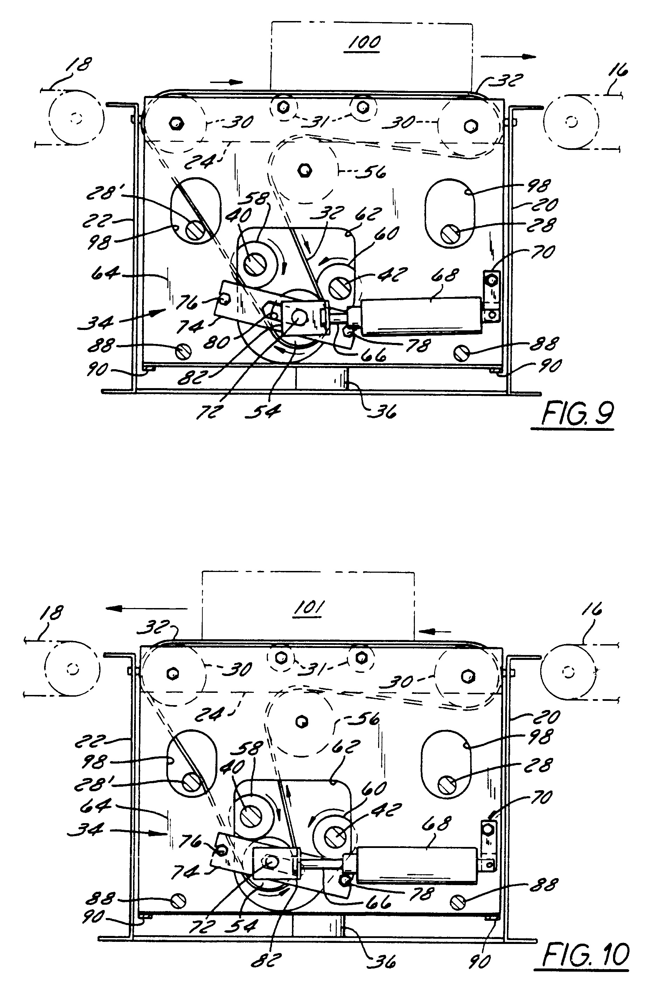

Figures 9 and 10 show the transfer belts 32 as they are driven in the two different directions. In Figure 9, a package 100 has arrived at the transfer unit and is to be shifted onto the right side conveyor 16. The control system has caused the air bags 36 to fill and shift the shiftable frame 34 upward, causing the top surface of the three transfer belts 32 to be raised slightly above the top surface of the conveyor rollers 24. The controller has also caused the piston rod 66 to be retracted into the cylinder 68, causing the drive roller to come into contact with the second friction wheel 60. The second friction wheel is rotating in a counterclockwise direction, so it causes the drive roller 54 to rotate in a clockwise direction, as shown. This causes the three transfer belts 32, which are looped around the drive roller 54, around the sheaves 30, 31, and around the tensioning sheave 56, to rotate in a clockwise direction, causing the package 100 to be transferred off to the right side conveyor 16.

In Figure 10, the controller has again caused the shiftable frame 34 to be shifted upward by means of the air bags 36. However, in this case, the controller has caused the piston to be pushed outward, bringing the drive roller 54 into contact with the first friction wheel 58. The first friction wheel 58 is rotating in a clockwise direction, and friction between the friction wheel 58 and the drive roller 54 causes the drive roller to rotate in a counterclockwise direction. Now, the three transfer belts 32 which are looped around the drive roller 54 are driven in a counterclockwise direction, causing the package 101 to be carried off to the left side conveyor 18.

When the air bags 36 are deflated and the shiftable frame 34 is in the down position, as in Figure 3, the drive roller 54 is below the two friction wheels 58, 60 and does not contact them, regardless of the position of the piston rod 66. This means that the drive roller 54 and the transfer belts 32 are driven only when needed to transfer articles. This conserves energy and greatly reduces wear and tear on the parts.

A schematic drawing of the pneumatic control system is shown in Figure 2. The control system includes an air compressor (not shown), which supplies air to the two sides of the cylinder 68 and to the air bags 36. An electronic sensor and central controller (not shown) reads a bar code on the package 100 or 101 or otherwise senses the package and determines the route that particular package is to take. The program controller (not shown) tracks the package by some known means and then triggers the solenoid valves 102 to open or close as needed to shift the piston back and forth in the cylinder 68 and to inflate and deflate the air bags 36 as required. Many control systems are known in the art to perform this function.

It will be obvious to those of ordinary skill in the art that modifications may be made to the embodiment described above without departing from the scope of the invention.

## Claims

1. A transfer conveyor (10) comprising first and second siderails (20, 22); rollers (24) mounted on the siderails (20, 22); a drive shaft (28) extending transverse to said rollers (24) and having a direction of rotation; means (26) for transmitting power from said drive shaft (28) to said rollers (24) to drive said rollers (24); a shiftable frame (34) adapted to shift up and down between two adjacent rollers (24) relative to said siderails (20, 22); a set of sheaves (30, 31) mounted in a coplanar arrangement on said shiftable frame (34); said shiftable frame (34) being shiftable between an upper position in which the top surface of said transfer belt (32) is located above the top surface of said rollers (24) and a lower position in which said top surface of said transfer belt (32) is located below said top surface of said rollers (24); and a transfer belt (32) mounted on said sheaves (30, 31); **characterized** in that
said transfer belt (32) is also wrapped around a drive roller (54); and in that it comprises
power transmission means for transmitting power from said drive shaft (28) to said drive roller (54) so as to selectively drive said drive roller (54) in a first direction of rotation or in a second direction of rotation opposite to the first direction of rotation while said drive shaft (28) is continuously operating.

2. A transfer conveyor (10) as recited in Claim 1, wherein said drive roller (54) is mounted so as to move with said shiftable frame (34) so that the length of said transfer belt (32) remains constant when the shiftable frame is shifted.

3. A transfer conveyor (10) as recited in Claim 1, wherein said power transmission means including:
first and second intermediate shafts (40, 42) extending substantially parallel to said drive shaft (28);
means (50) for transmitting power from said drive shaft to said first and second intermediate shafts (40, 42); and
means (58, 60) for selectively transmitting power from said first and second intermediate shafts (40, 42) to said drive roller (54), such that, when power is transmitted from said first intermediate shaft (40) to said drive roller (54), the drive roller rotates in a first direction, and, when power is transmitted from said second intermediate shaft (42) to said drive roller (54), the drive roller rotates in the opposite direction.

4. A transfer conveyor as recited in Claim 3, wherein said first intermediate shaft (40) rotates in a first direction and said second intermediate shaft (42) rotates in the opposite direction.

5. A transfer conveyor as recited in Claim 4, wherein said means for selectively transmitting power from said first and second intermediate shafts (40, 42) to said drive roller (54) includes:
first and second friction wheels (58, 60) mounted on said first and second intermediate shafts (40, 42) respectively; and
means for selectively shifting said drive roller (54) into and out of engagement with said first and second friction wheels (58, 60).

## Patentansprüche

1. Übergabeförderer (10) mit ersten und zweiten Seitenschienen (20, 22); Rollen (24), die an den Seitenschienen (20, 22) angesetzt sind; einer Antriebswelle (28), die sich quer zu den Rollen (24) erstreckt und eine Drehrichtung hat; Einrichtungen (26), um Kraft von der Antriebswelle (28) auf die Rollen (24) zu übertragen, um die Rollen (24) anzutreiben; einem verlagerbaren Rahmen (34), der angeordnet ist, um zwischen zwei benachbarten Rollen (24) relativ zu den Seitenschienen (20, 22) nach oben und nach unten verlagert zu werden; einem Satz Riemenscheiben (30, 31), die in einer koplanaren Anordnung am verlagerbaren Rahmen (34) angesetzt sind; wobei der verlagerbare Rahmen (34) zwischen einer oberen Position, in der die obere Fläche des Übergaberiemens (32) oberhalb der oberen Fläche der Rollen (24) gelegen ist, und einer unteren Position, in der die obere Fläche des Übergaberiemens (32) unterhalb der oberen Fläche der Rollen (24) gelegen ist, verlagerbar ist; und einem Übergaberiemen (32), der auf die Riemenscheiben (30, 31) aufgesetzt ist; **dadurch gekennzeichnet**, daß
der Übergaberiemen (32) ebenfalls um eine Antriebsrolle (54) gewunden ist; und
daß er Einrichtungen zur Kraftübertragung aufweist, um Kraft von der Antriebswelle (28) auf die Antriebsrolle (54) zu übertragen, um so die Antriebsrolle (54) wahlweise in einer ersten Drehrichtung oder in einer zweiten Drehrichtung entgegengesetzt zur ersten Drehrichtung anzutreiben, während die Antriebswelle (28) ständig betrieben wird.

2. Übergabeförderer (10) nach Anspruch 1, wobei die Antriebsrolle (54) so angesetzt ist, um sich mit dem verlagerbaren Rahmen (34) zu bewegen, so daß die Länge des Übergaberiemens (32) konstant bleibt, wenn der verlagerbare Rahmen verlagert wird.

3. Übergabeförderer (10) nach Anspruch 1, wobei die Einrichtungen zur Kraftübertragung aufweisen:
erste und zweite Zwischenwellen (40, 42), die sich im wesentlichen parallel zur Antriebswelle (28) erstrecken;
Einrichtungen (50), um Kraft von der Antriebswelle auf die ersten und zweiten Zwischenwellen (40, 42) zu übertragen; und
Einrichtungen (58, 60), um Kraft wahlweise von den ersten und zweiten Zwischenwellen (40, 42) auf die Antriebsrolle (54) zu übertragen, so daß sich die Antriebsrolle bei Kraftübertragung von der ersten Zwischenwelle (40) auf die Antriebsrolle (54) in einer ersten Richtung dreht, und sich die Antriebsrolle bei Kraftübertragung von der zweiten Zwischenwelle (42) auf die Antriebsrolle (54) in der entgegengesetzten Richtung dreht.

4. Übergabeförderer nach Anspruch 3, wobei sich die erste Zwischenwelle (40) in einer ersten Richtung dreht und sich die zweite Zwischenwelle (42) in der entgegengesetzten Richtung dreht.

5. Übergabeförderer nach Anspruch 4, wobei die Einrichtung zur wahlweisen Kraftübertragung von den ersten und zweiten Zwischenwellen (40, 42) auf die Antriebsrolle (54) aufweist:
erste und zweite Reibräder (58, 60), die jeweils an die ersten und zweiten Zwischenwellen (40, 42) angesetzt sind; und
Einrichtungen, um die Antriebsrolle (54) wahlweise in Eingriff und außer Eingriff mit den ersten und zweiten Reibrädern (58, 60) zu verlagern.

## Revendications

1. Convoyeur (10) de transfert comportant des premier et second rails latéraux (20, 22); des rouleaux (24) montés sur les rails latéraux (20, 22); un arbre d'entraînement (28) s'étendant transversalement auxdits rouleaux (24) et ayant un sens de rotation; des moyens (26) pour transmettre une puissance provenant dudit arbre d'entraînement (28) vers lesdits rouleaux (24) pour entraîner lesdits rouleaux (24); un châssis mobile (34) adapté pour se déplacer par rapport auxdits rails latéraux (20, 22) vers le haut et vers le bas entre deux rouleaux (24) adjacents; un jeu de poulies (30, 31) monté selon un agencement coplanaire sur ledit châssis mobile (34); ledit châssis mobile (34) pouvant être déplacé entre une position supérieure dans laquelle la surface supérieure d'une courroie de transfert (32) est située au-dessus de la surface supérieure desdits rouleaux (24) et une position inférieure dans laquelle ladite surface supérieure de ladite courroie de transfert (32) est située au-dessous de ladite surface supérieure desdits rouleaux (24); et une courroie de transfert (32) montée sur lesdites poulies (30, 31); caractérisé en ce que
ladite courroie de transfert (32) est aussi enroulée autour d'un rouleau d'entraînement (54); et en ce qu'il comporte
des moyens de transmission de puissance pour transmettre une puissance provenant dudit arbre d'entraînement (28) vers ledit rouleau d'entraînement (54) de manière a entraîner de manière sélective ledit rouleau d'entraînement (54) dans une première direction de rotation ou dans une seconde direction de rotation opposée à la première direction de rotation alors que ledit arbre d'entraînement (28) est actionné de manière continue.

2. Convoyeur (10) de transfert selon la revendication 1, dans lequel ledit rouleau d'entraînement (54) est monté de manière à se déplacer avec ledit châssis mobile (34) de sorte que la longueur de ladite courroie de transfert (32) reste constante lorsque le châssis mobile est déplacé.

3. Convoyeur (10) de transfert selon la revendication 1, dans lequel lesdits moyens de transmission de puissance comportent :
des premier et second arbres intermédiaires (40, 42) s'étendant a peu près parallèlement audit arbre d'entraînement (28);
des moyens (50) pour transmettre une puissance à partir dudit arbre d'entraînement vers lesdits premier et second arbres intermédiaires (40,42); et
des moyens (58, 60) pour transmettre de manière sélective une puissance à partir desdits premier et second arbres intermédiaires (40, 42) vers ledit rouleau d'entraînement (54), de telle sorte que lorsqu'une puissance est transmise à partir dudit premier arbre intermédiaire (40) vers ledit rouleau d'entraînement (54), le rouleau d'entraînement tourne dans une première direction, et lorsqu'une puissance est transmise à partir dudit second arbre intermédiaire (42) vers ledit rouleau d'entraînement (54), le rouleau d'entraînement tourne dans la direction opposée.

4. Convoyeur de transfert selon la revendication 3, dans lequel ledit premier arbre intermédiaire (40) tourne dans une première direction et ledit second arbre intermédiaire (42) tourne dans la direction opposée.

5. Convoyeur de transfert selon la revendication 4, dans lequel lesdits moyens pour transmettre de manière sélective une puissance à partir desdits premier et second arbres intermédiaires (40, 42) vers ledit rouleau d'entraînement (54) comportent :
des première et seconde roues (58, 60) de friction montées sur lesdits premier et second arbres intermédiaires (40, 42) respectivement; et
des moyens pour déplacer de manière sélective ledit rouleau d'entraînement (54) en contact ou hors de contact avec lesdites première et seconde roues de friction (58, 60).
